(19) Europäisches Patentamt
European Patent Office
Office européen des brevets

(11) **EP 2 093 875 A1**

(12) **EUROPÄISCHE PATENTANMELDUNG**

(43) Veröffentlichungstag:
**26.08.2009 Patentblatt 2009/35**

(51) Int Cl.:
***H02M 7/5387*** (2007.01)

(21) Anmeldenummer: 08151808.6

(22) Anmeldetag: **22.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK**

(71) Anmelder: **ABB Schweiz AG**
**5400 Baden (CH)**

(72) Erfinder:
• **Ronner, Beat**
  **CH-4464, Maisprach (CH)**
• **Gaupp, Osvin**
  **CH-5400, Baden (CH)**

(74) Vertreter: **ABB Patent Attorneys**
**C/o ABB Schweiz AG**
**Intellectual Property (CH-LC/IP),**
**Brown Boveri Strasse 6**
**5400 Baden (CH)**

(54) **Verfahren zum Betrieb einer Umrichterschaltung sowie Vorrichtung zur Durchführung des Verfahrens**

(57)    Es wird ein Verfahren zum Betrieb einer Umrichterschaltung angegeben, wobei die Umrichterschaltung eine Umrichtereinheit (1) mit einer Vielzahl an ansteuerbaren Leistungshalbleiterschaltern aufweist und mit einem dreiphasigen elektrischen Wechselspannungsnetz verbunden ist und bei dem die ansteuerbaren Leistungshalbleiterschalter mittels eines aus einem Regelsignal ($S_R$) gebildeten Ansteuersignals ($S_A$) angesteuert werden und das Regelsignal ($S_R$) durch Ausregelung eines H-ten Oberschwingungsanteils von Netzströmen ($i_{NH}$) auf einen Netzstromsollwert ($i_{NHref}$) gebildet wird, wobei H=1, 2, 3, ..., ist. Zu Reduzierung eines Oberschwingungsanteils in den Netzspannungen wird der Netzstromsollwert ($i_{NHref}$) durch Ausregelung des Betrages eines H-ten Oberschwingungsanteils der Netzspannungen ($U_{NH}$) auf den Betrag eines vorgebbaren Netzspannungssollwertes ($U_{NHref}$) gebildet. Ferner wird eine Vorrichtung zur Durchführung des Verfahrens angegeben.

Fig. 1

## Beschreibung

## Technisches Gebiet

Die Erfindung bezieht sich auf das Gebiet der Leistungselektronik. Sie geht aus von einem Verfahren zum Betrieb einer Umrichterschaltung sowie einer Vorrichtung zur Durchführung des Verfahrens gemäss dem Oberbegriff der unabhängigen Ansprüche.

## Stand der Technik

Herkömmliche Umrichterschaltungen umfassen eine Vielzahl an ansteuerbaren Leistungshalbleiterschaltern, welche in bekannter Weise zur Schaltung von mindestens zwei Schaltspannungsniveaus verschaltet sind. Typischerweise ist eine solche Umrichterschaltung mit einem elektrischen Wechselspannungsnetz verbunden, welches insbesondere dreiphasig ausgebildet ist. Solche Umrichterschaltungen werden häufig in Industrieanlagen eingesetzt, wobei die Umrichterschaltungen netzgekoppelt sind und wobei natürlich weitere Einsatzgebiete und Verwendungsmöglichkeiten denkbar sind.

Für den Betrieb der Umrichterschaltung ist eine Regelungsvorrichtung vorgesehen, welche eine Reglereinheit zur Bildung eines Regelsignals durch Ausregelung eines H-ten Oberschwingungsanteils von Netzströmen auf einen Netzstromsollwert aufweist und die über eine Ansteuerschaltung zur Bildung eines Ansteuersignals aus dem Regelsignal mit den ansteuerbaren Leistungshalbleiterschaltern verbunden ist, wobei der H-te Oberschwingungsanteils von der Umrichterschaltung hervorgerufen wird und allgemein H=1, 2, 3,...ist. Typische Werte für H sind H= 5, 7, 11, 13. Mittels des Ansteuersignals werden somit die Leistungshalbleiterschalter angesteuert.

Das vorstehend genannte Verfahren zum Betrieb der Umrichterschaltung erlaubt mittels der Regelungsvorrichtung eine Ausregelung eines H-ten Oberschwingungsanteils der Netzströme auf einen Netzstromsollwert. In einem elektrischen Wechselspannungsnetz können aber neben Oberschwingungsanteilen in den Netzströmen auch Oberschwingungsanteile in den Netzspannungen auftreten, die sich aber mittels des bekannte vorstehend beschriebene Verfahrens nicht ausregeln und damit nicht reduzieren lassen.

## Darstellung der Erfindung

Aufgabe der Erfindung ist es deshalb, ein Verfahren zum Betrieb einer Umrichterschaltung anzugeben, mittels welchem ein Oberschwingungsanteil in Netzspannungen eines mit der Umrichterschaltung verbundenen elektrischen Wechselspannungsnetzes reduziert werden kann. Ferner ist es die Aufgabe der Erfindung, eine Vorrichtung anzugeben, mit der das Verfahren in besonders einfacher Weise durchgeführt werden kann.

Diese Aufgaben werden durch die Merkmale des Anspruchs 1 bzw. des Anspruchs 7 gelöst. In den abhängigen Ansprüchen sind vorteilhafte Weiterbildungen der Erfindung angegeben.

Die Umrichterschaltung weist eine Umrichtereinheit mit einer Vielzahl an ansteuerbaren Leistungshalbleiterschaltern auf und ist mit einem dreiphasigen elektrischen Wechselspannungsnetz verbunden. Beim erfindungsgemässen Verfahren zum Betrieb der Umrichterschaltung werden nun die ansteuerbaren Leistungshalbleiterschalter mittels eines aus einem Regelsignal gebildeten Ansteuersignals angesteuert und das Regelsignal wird durch Ausregelung eines H-ten Oberschwingungsanteils von Netzströmen auf einen Netzstromsollwert gebildet, wobei H=1, 2, 3, ..., ist. Erfindungsgemäss wird der Netzstromsollwert durch Ausregelung des Betrages eines H-ten Oberschwingungsanteils von Netzspannungen auf den Betrag eines vorgebbaren Netzspannungssollwertes gebildet. Damit beeinflusst der entsprechende H-te Oberschwingungsanteil der Netzspannungen direkt die Bildung des Netzstromsollwertes, so dass der H-te Oberschwingungsanteil in den Netzspannungen in gewünschtem Masse vorteilhaft reduziert werden kann.

Die erfindungsgemässe Vorrichtung zur Durchführung des Verfahrens zum Betrieb der Umrichterschaltung weist eine der Erzeugung des Regelsignals $S_R$ dienende Regelungsvorrichtung auf, die über eine Ansteuerschaltung zur Bildung des Ansteuersignals mit den ansteuerbaren Leistungshalbleiterschaltern verbunden ist, wobei die Regelungsvorrichtung eine erste Reglereinheit zur Bildung des Regelsignal durch Ausregelung des H-ten Oberschwingungsanteils der Netzströmen auf den Netzstromsollwert aufweist und H=1, 2, 3, ..., ist. Nach der Erfindung weist die Regelungsvorrichtung nun eine zweite Reglereinheit zur Bildung des Netzstromsollwertes durch Ausregelung des Betrages des H-ten Oberschwingungsanteils von Netzspannungen auf den Betrag des vorgebbaren Netzspannungssollwertes auf. Die erfindungsgemässe Vorrichtung zur Durchführung des Verfahrens zum Betrieb der Umrichterschaltung ist somit sehr einfach und kostengünstig realisierbar, da der Schaltungsaufwand äusserst gering gehalten werden kann und zudem nur eine geringe Anzahl an Bauelementen für den Aufbau benötigt wird. Mittels dieser Vorrichtung ist das erfindungsgemässe Verfahren somit besonders einfach durchführbar.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1　eine Ausführungsform einer erfindungsgemässen Vorrichtung zur Durchfüh- rung des erfindungsgemässen Verfahrens zum Betrieb einer Umrichterschal- tung,

Fig. 2    eine Ausführungsform einer erfindungsgemässen Regelungsvorrichtung und

Fig. 3    ein zeitlicher Verlauf des Betrages eines H-ten Oberschwingungsanteils von Netzspannungen.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

**Wege zur Ausführung der Erfindung**

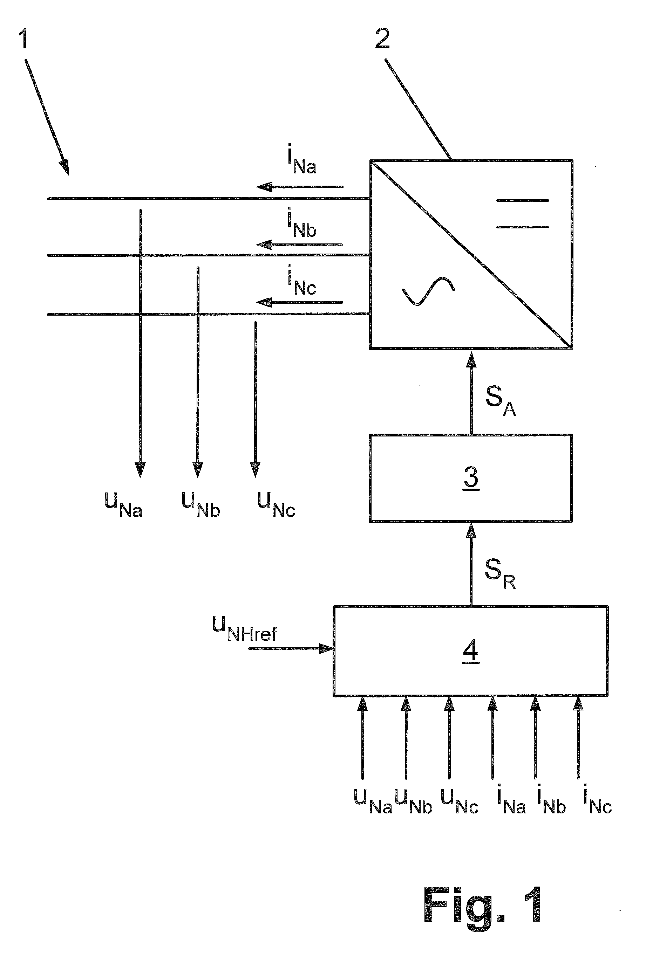

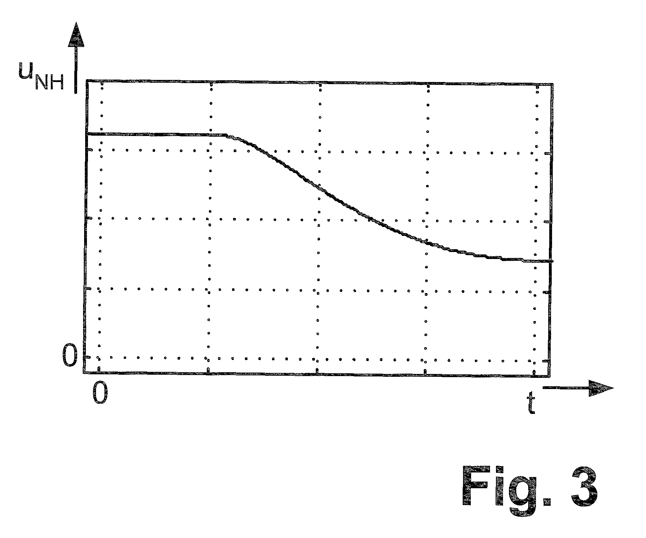

In Fig. 1 ist eine Ausführungsform einer erfindungsgemässen Vorrichtung zur Durchführung des erfindungsgemässen Verfahrens zum Betrieb einer Umrichterschaltung gezeigt. Die Umrichterschaltung weist gemäss Fig. 1 eine Umrichtereinheit 2 mit einer Vielzahl an ansteuerbaren Leistungshalbleiterschaltern auf und ist mit einem dreiphasigen elektrischen Wechselspannungsnetz verbunden. Es sei erwähnt, dass die Umrichtereinheit 1 allgemein als jedwede Umrichtereinheit 1 zur Schaltung von $\geq 2$ Schaltgleichspannungsniveaus (Multi-Level-Umrichterschaltung) ausgebildet sein kann. Beim erfindungsgemässen Verfahren zum Betrieb der Umrichterschaltung werden die ansteuerbaren Leistungshalbleiterschalter mittels eines aus einem Regelsignal $S_R$ gebildeten Ansteuersignals $S_A$ angesteuert und das Regelsignal $S_R$ durch Ausregelung eines H-ten Oberschwingungsanteils von Netzströmen $i_{NH}$ auf einen Netzstromsollwert $i_{NHref}$ gebildet, wobei H=1, 2, 3, ..., ist. Erfindungsgemäss wird der Netzstromsollwert $i_{NHref}$ durch Ausregelung des Betrages eines H-ten Oberschwingungsanteils von Netzspannungen $u_{NH}$ auf den Betrag eines vorgebbaren Netzspannungssollwertes $u_{NHref}$ gebildet. Somit beeinflusst der entsprechende H-te Oberschwingungsanteil der Netzspannungen $u_{NH}$, insbesondere der Betrag des H-ten Oberschwingungsanteils von Netzspannungen $u_{NH}$, die Bildung des Netzstromsollwertes $i_{NHref}$ direkt, so dass der H-te Oberschwingungsanteil in den Netzspannungen in gewünschtem Masse vorteilhaft reduziert werden kann. Ein zeitlicher Verlauf des Betrages eines H-ten Oberschwingungsanteils von Netzspannungen $u_{NH}$ ist in Fig. 3 dargestellt, wobei eine deutliche Reduzierung des H-ten Oberschwingungsanteils über der Zeit t erkennbar ist.

Es hat sich als vorteilhaft erwiesen, dass die Ausregelung des Betrages des H-ten Oberschwingungsanteils der Netzspannungen $u_{NH}$ auf den Betrag des vorgebbaren Netzspannungssollwertes $u_{NHref}$ nach einer Proportional-Integral-Charakteristik erfolgt, da diese sich durch Einfachheit auszeichnet. Denkbar ist aber auch jedwede andere Reglercharakteristik.

Vorzugsweise wird der Betrag des H-ten Oberschwingungsanteils der Netzspannungen $u_{NH}$ aus der Park-Clarke Transformation der Netzspannungen $u_{Nd}$, $u_{Nq}$ gebildet und der Netzstromsollwert $i_{NHref}$ wird zusätzlich aus dem Phasenwinkel $\varphi_H$ des H-ten Oberschwingungsanteils der Netzspannungen $u_{NH}$ gebildet. $u_{Nd}$ und $u_{Nq}$ sind die entsprechenden Komponenten der Park-Clarke Transformation der Netzspannungen.

Es sei erwähnt, dass die Park-Clarke-Transformation allgemein definiert ist zu

$$\overline{x} = \left(x_d + j x_q\right)e^{j\omega t},$$

wobei $\overline{X}$ allgemein eine komplexe Grösse, $x_d$ die d-Komponente der Park-Clarke-Transformation der Grösse $\overline{x}$ und $x_q$ die q-Komponente der Park-Clarke-Transformation der Grösse $\overline{x}$ ist. Vorteilhaft werden bei der Park-Clarke-Transformation nicht nur die Grundschwingung der komplexen Grösse $\overline{x}$ transformiert, sondern auch sämtlich vorkommende Oberschwingungsanteile der komplexen Grösse $\overline{x}$. Der H-te Oberschwingungsanteil ist somit also auch enthalten und kann durch einfache Ausfilterung extrahiert werden.

Bezüglich des erfindungsgemässen Verfahrens wird die Park-Clarke Transformation der Netzspannungen $u_{Nd}$, $u_{Nq}$ mit Vorteil aus der Raumzeigertransformation der Netzspannungen $u_{Na}$, $u_{N\beta}$ gebildet, d.h. die Netzspannungen $u_{Na}$, $u_{Nb}$, $u_{Nc}$ werden durch die Raumzeigertransformation transformiert.

Es sei erwähnt, dass die Raumzeigertransformation wie folgt definiert ist

$$\overline{x} = x_\alpha + j x_\beta,$$

wobei $\overline{x}$ allgemein eine komplexe Grösse, $x_\alpha$ die $\alpha$-Komponente der Raumzeigertransformation der Grösse $\overline{X}$ und $x_\beta$ die $\beta$-Komponente der Raumzeigertransformation der Grösse $\overline{x}$ ist.

Vorzugsweise wird der H-te Oberschwingungsanteil der Netzströme $i_{NH}$ aus der Park-Clarke Transformation der Netzströme $i_{Nd}$, $i_{Nq}$ gebildet. $i_{Nd}$ und $i_{Nq}$ sind die entsprechenden Komponenten der Park-Clarke Transformation der Netzströme. Ferner wird die Park-Clarke Transformation der Netzströme $i_{Nd}$, $i_{Nq}$ aus der Raumzeigertransformation der Netzströme $i_{Na}$, $i_{N\beta}$ gebildet, d.h. die Netzströme $i_{Na}$, $i_{Nb}$, $i_{Nc}$ werden durch die Raumzeigertransformation transformiert.

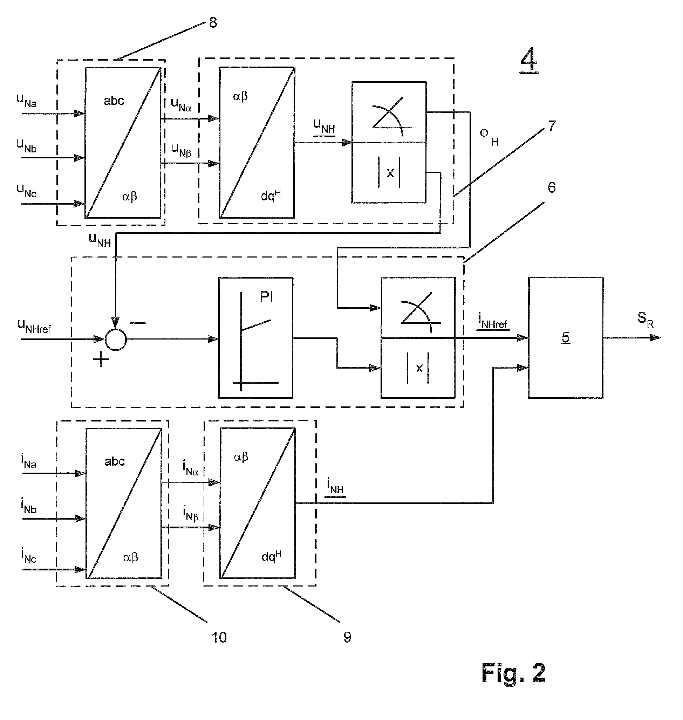

Wie bereits erwähnt ist in Fig. 1 eine Ausführungsform einer erfindungsgemässen Vorrichtung zur Durchführung des erfindungsgemässen Verfahrens zum Betrieb einer Umrichterschaltung gezeigt. Gemäss Fig. 1 ist die der Erzeugung des Regelsignals $S_R$ dienende Regelungsvorrichtung 4 über eine Ansteuerschaltung 3 zur Bildung des Ansteuersignals $S_A$ mit den ansteuerbaren Leistungshalbleiterschaltern der Umrichtereinheit 2 verbunden. In Fig. 2 ist eine Ausführungsform einer erfindungsgemässen Regelungsvorrichtung 4 dargestellt, wobei die Regelungsvorrichtung 4 eine erste Reglereinheit 5 zur Bildung des Regelsignals $S_R$ durch Ausregelung des H-ten Oberschwingungsanteils der Netzströmen $i_{NH}$ auf den Netzstromsollwert $i_{NHref}$ aufweist und H=1, $\overline{2}$, 3, ..., ist. Erfindungsgemäss weist die Regelungsvorrichtung 4 eine zweite Reglereinheit 6 zur Bildung des Netzstromsollwertes $i_{NHref}$ durch Ausregelung des Betrages eines H-ten Oberschwingungsanteils von Netzspannungen $u_{NH}$ auf den Betrag eines vorgebbaren Netzspannungssollwertes $u_{NHref}$ auf.

Vorzugsweise umfasst die zweite Reglereinheit 6 zur Ausregelung des Betrages des H-ten Oberschwingungsanteils der Netzspannungen $u_{NH}$ auf den Betrag des vorgebbaren Netzspannungssollwertes $u_{NHref}$ einen Proportional-Integral-Regler.

Gemäss Fig. 2 weist die Regelungsvorrichtung 4 zudem eine erste Berechnungseinheit 7 zur Bildung der Park-Clarke Transformation der Netzspannungen $u_{Nd}$, $u_{Nq}$ aus der Raumzeigertransformation der Netzspannungen $u_{N\alpha}$, $u_{N\beta}$ und zur Bildung des Betrages des H-ten Oberschwingungsanteils der Netzspannungen $u_{NH}$ aus der Park-Clarke Transformation der Netzspannungen $u_{Nd}$, $u_{Nq}$ auf. Darüber hinaus ist der ersten Berechnungseinheit 7 der Phasenwinkel $\varphi_H$ des H-ten Oberschwingungsanteils der Netzspannungen $u_{NH}$ zur Bildung des Netzstromsollwertes $i_{NHref}$ zusätzlich aus dem Phasenwinkel $\varphi_H$ des H-ten Oberschwingungsanteils der Netzspannungen $u_{NH}$ zugeführt.

Ferner weist die Regelungsvorrichtung 4 gemäss Fig. 2 eine zweite Berechnungseinheit 8 zur Bildung der Raumzeigertransformation der Netzspannungen $u_{N\alpha}$, $u_{N\beta}$ auf. Ferner umfasst die Regelungsvorrichtung 4 eine dritte Berechnungseinheit 9 zur Bildung der Park-Clarke Transformation der Netzströme $i_{Nd}$, $i_{Nq}$ aus der Raumzeigertransformation der Netzströme $i_{N\alpha}$, $i_{N\beta}$ und zur Bildung des H-ten Oberschwingungsanteils der Netzströmen $i_{NH}$ aus der Park-Clarke Transformation der Netzströme $i_{Nd}$, $i_{Nq}$. Die Regelungsvorrichtung 4 weist weiterhin eine vierte Berechnungseinheit 10 zur Bildung der Raumzeigertransformation der Netzströme $i_{N\alpha}$, $i_{N\beta}$ auf.

Das vorstehend detailliert beschriebene Verfahren sowie die zugehörige Vorrichtung zur Durchführung des Verfahrens bewirkt die Reduzierung eines H-ten Oberschwingungsanteils der Netzspannungen $u_{NH}$. Es versteht sich, dass zur Reduzierung beispielsweise mehrerer Oberschwingungsanteile der Netzspannungen für jeden dieser Oberschwingungsanteile das vorstehend erläuterte Verfahren mit den entsprechenden Verfahrensschritten separat durchgeführt wird. Bezüglich der Vorrichtung zur Durchführung des Verfahrens ist zur Reduzierung der Oberschwingungsanteile demnach für jeden dieser Oberschwingungsanteile eine zugehörige vorstehend beschriebene Vorrichtung notwendig.

Sämtliche Schritte des erfindungsgemässen Verfahrens können als Software realisiert werden, wobei diese dann beispielsweise auf ein Computersystem, insbesondere mit einem digitalen Signalprozessor, geladen werden und darauf ablaufen können. Ferner kann die vorstehend detailliert beschriebene erfindungsgemässe Vorrichtung auch in einem Computersystem, insbesondere in einem digitalen Signalprozessor, realisiert sein.

Insgesamt konnte gezeigt werden, dass die, insbesondere in Fig. 1 und Fig. 2 gezeigte, erfindungsgemässe Vorrichtung zur Durchführung des erfindungsgemässen Verfahrens zum Betrieb der Umrichterschaltung sehr einfach und kostengünstig realisiert werden kann, da der Schaltungsaufwand äusserst gering ist und zudem nur eine geringe Anzahl an Bauelementen für den Aufbau benötigt wird. Somit ist mit dieser Vorrichtung ist das erfindungsgemässe Verfahren besonders einfach durchführbar.

**Bezugszeichenliste**

1      elektrisches Wechselspannungsnetz

2      Umrichtereinheit

3      Ansteuerschaltung

4      Regelungsvorrichtung

5      erste Reglereinheit

6      zweite Reglereinheit

7      erste Berechnungseinheit

8      zweite Berechnungseinheit

9      dritte Berechnungseinheit

10      vierte Berechnungseinheit

**Patentansprüche**

1. Verfahren zum Betrieb einer Umrichterschaltung, wobei die Umrichterschaltung eine Umrichtereinheit (2) mit einer Vielzahl an ansteuerbaren Leistungshalbleiterschaltern aufweist und mit einem dreiphasigen elektrischen Wechselspannungsnetz (1) verbunden ist,
bei dem die ansteuerbaren Leistungshalbleiterschalter mittels eines aus einem Regelsignal ($S_R$)

gebildeten Ansteuersignals ($S_A$) angesteuert werden und das Regelsignal ($S_R$) durch Ausregelung eines H-ten Oberschwingungsanteils von Netzströmen ($i_{NH}$) auf einen Netzstromsollwert ($i_{NHref}$) gebildet wird, wobei H=1, 2, 3, ..., ist,
**dadurch gekennzeichnet,**
**dass** der Netzstromsollwert ($i_{NHref}$) durch Ausregelung des Betrages eines H-ten Oberschwingungsanteils von Netzspannungen ($u_{NH}$) auf den Betrag eines vorgebbaren Netzspannungssollwertes ($u_{NHref}$) gebildet wird.

2. Verfahren nach Anspruch 1, **dadurch gekennzeichnet, dass** der Betrag des H-ten Oberschwingungsanteils der Netzspannungen ($u_{NH}$) aus der Park-Clarke Transformation der Netzspannungen ($u_{Nd}$, $u_{Nq}$) gebildet wird, und
dass der Netzstromsollwert ($i_{NHref}$) zusätzlich aus dem Phasenwinkel ($\varphi_H$) des H-ten Oberschwingungsanteils der Netzspannungen ($u_{NH}$) gebildet wird.

3. Verfahren nach Anspruch 2, **dadurch gekennzeichnet, dass** die Park-Clarke Transformation der Netzspannungen ($u_{Nd}$, $u_{Nq}$) aus der Raumzeigertransformation der Netzspannungen ($u_{N\alpha}$, $u_{N\beta}$) gebildet wird.

4. Verfahren nach einem der Ansprüche 1 bis 3, **dadurch gekennzeichnet, dass** der H-te Oberschwingungsanteil der Netzströme ($i_{NH}$) aus der Park-Clarke Transformation der Netzströme ($i_{Nd}$, $i_{Nq}$) gebildet wird.

5. Verfahren nach Anspruch 4, **dadurch gekennzeichnet, dass** die Park-Clarke Transformation der Netzströme ($i_{Nd}$, $i_{Nq}$) aus der Raumzeigertransformation der Netzströme ($i_{N\alpha}$, $i_{N\beta}$) gebildet wird.

6. Verfahren nach einem der Ansprüche 1 bis 5, **dadurch gekennzeichnet, dass** die Ausregelung des Betrages des H-ten Oberschwingungsanteils der Netzspannungen ($u_{NH}$) auf den Betrag des vorgebbaren Netzspannungssollwertes ($u_{NHref}$) nach einer Proportional-Integral-Charakteristik erfolgt.

7. Vorrichtung zur Durchführung eines Verfahrens zum Betrieb einer Umrichterschaltung, wobei die Umrichterschaltung eine Umrichtereinheit (1) mit einer Vielzahl an ansteuerbaren Leistungshalbleiterschaltern aufweist und mit einem dreiphasigen elektrischen Wechselspannungsnetz verbunden ist, mit einer der Erzeugung eines Regelsignals ($S_R$) dienenden Regelungsvorrichtung (4), die über eine Ansteuerschaltung (3) zur Bildung eines Ansteuersignals ($S_A$) mit den ansteuerbaren Leistungshalbleiterschaltern verbunden ist, wobei die Regelungsvorrichtung (4) eine erste Reglereinheit (5) zur Bildung des Regelsignals ($S_R$) durch Ausregelung eines H-ten Oberschwingungsanteils von Netzströmen ($i_{NH}$) auf einen Netzstromsollwert ($i_{NHref}$) aufweist, wobei H=1, 2, 3, ..., ist,
**dadurch gekennzeichnet,**
**dass** die Regelungsvorrichtung (4) eine zweite Reglereinheit (6) zur Bildung des Netzstromsollwertes ($i_{NHref}$) durch Ausregelung des Betrages eines H-ten Oberschwingungsanteils von Netzspannungen ($u_{NH}$) auf den Betrag eines vorgebbaren Netzspannungssollwertes ($u_{NHref}$) aufweist.

8. Vorrichtung nach Anspruch 7, **dadurch gekennzeichnet, dass** die Regelungsvorrichtung (4) eine erste Berechnungseinheit (7) zur Bildung der Park-Clarke Transformation der Netzspannungen ($u_{Nd}$, $u_{Nq}$) aus der Raumzeigertransformation der Netzspannungen ($u_{N\alpha}$, $u_{N\beta}$) und zur Bildung des Betrages des H-ten Oberschwingungsanteils der Netzspannungen ($u_{NH}$) aus der Park-Clarke Transformation der Netzspannungen ($u_{Nd}$, $u_{Nq}$) aufweist, und dass der ersten Berechnungseinheit (7) der Phasenwinkel ($\varphi$) des H-ten Oberschwingungsanteils der Netzspannungen ($u_{NH}$) zur Bildung des Netzstromsollwertes ($i_{NHref}$) zusätzlich aus dem Phasenwinkel ($\varphi_H$) des H-ten Oberschwingungsanteils der Netzspannungen ($u_{NH}$) zugeführt ist.

9. Vorrichtung nach Anspruch 8, **dadurch gekennzeichnet, dass** die Regelungsvorrichtung (4) eine zweite Berechnungseinheit (8) zur Bildung der Raumzeigertransformation der Netzspannungen ($u_{N\alpha}$, $u_{N\beta}$) aufweist.

10. Vorrichtung nach einem der Ansprüche 7 bis 9, **dadurch gekennzeichnet, dass** die Regelungsvorrichtung (4) eine dritte Berechnungseinheit (9) zur Bildung der Park-Clarke Transformation der Netzströme ($i_{Nd}$, $i_{Nq}$) aus der Raumzeigertransformation der Netzströme ($i_{N\alpha}$, $i_{N\beta}$) und zur Bildung des H-ten Oberschwingungsanteils der Netzströmen ($i_{NH}$) aus der Park-Clarke Transformation der Netzströme ($i_{Nd}$, $i_{Nq}$) aufweist.

11. Vorrichtung nach Anspruch 10, **dadurch gekennzeichnet, dass** die Regelungsvorrichtung (4) eine vierte Berechnungseinheit (10) zur Bildung der Raumzeigertransformation der Netzströme ($i_{N\alpha}$, $i_{N\beta}$) aufweist.

12. Vorrichtung nach einem der Ansprüche 7 bis 11, **dadurch gekennzeichnet, dass** die zweite Reglereinheit (6) zur Ausregelung des Betrages des H-ten Oberschwingungsanteils der Netzspannungen ($u_{NH}$) auf den Betrag des vorgebbaren Netzspannungssollwertes ($u_{NHref}$) einen Proportional-Integral-Regler umfasst.

# Fig. 1

Fig. 2

**Fig. 3**

Europäisches
Patentamt

European
Patent Office

Office européen
des brevets

**EUROPÄISCHER RECHERCHENBERICHT**

**Nummer der Anmeldung**

EP 08 15 1808

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 472 775 B1 (FENGTAI HUANG ET AL.) 29. Oktober 2002 (2002-10-29) * Zusammenfassung * * Abbildung 3 * * Spalte 2, Zeile 25 - Spalte 3, Zeile 22 * * Spalte 3, Zeile 34 - Zeile 48 * * Anspruch 8 * ----- | 1,7 | INV. H02M7/5387 |
| X | US 5 648 894 A (RIK W.A.A. DEDONCKER ET AL.) 15. Juli 1997 (1997-07-15) * Zusammenfassung * * Abbildung 1 * * Spalte 2, Zeile 18 - Zeile 52 * ----- | 1,7 | |
| X | US 6 466 465 B1 (MOHAMMAD N. MARWALI) 15. Oktober 2002 (2002-10-15) * Abbildung 13 * * Spalte 2, Zeile 24 - Zeile 38 * ----- | 1,7 | |
| A | L. A. SERPA ET AL.: "A modified direct power control strategy allowing the connection of three-phase inverter to the grid through LCL filters." IEEE, 2005, XP010842424 * Seite 566, Spalte 1, Zeile 9 - Zeile 14 * * Seite 567, Spalte 1, Zeile 4 - Zeile 9 * * Seite 568, Spalte 1, Zeile 16 - Seite 568, Spalte 2, Zeile 5 * * Seite 568, Spalte 2, Zeile 20 - Seite 569, Spalte 2, Zeile 2 * ----- | 1-12 | RECHERCHIERTE SACHGEBIETE (IPC) H02M |
| A | EP 1 870 997 A (ABB SCHWEIZ AG) 26. Dezember 2007 (2007-12-26) * Zusammenfassung * * Absatz [0004] * * Abbildung 1 * ----- -/-- | 1-12 | |

Der vorliegende Recherchenbericht wurde für alle Patentansprüche erstellt

| Recherchenort | Abschlußdatum der Recherche | Prüfer |
|---|---|---|
| Den Haag | 5. Dezember 2008 | Lund, Michael |

| | Europäisches Patentamt European Patent Office Office européen des brevets | **EUROPÄISCHER RECHERCHENBERICHT** | **Nummer der Anmeldung** EP 08 15 1808 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2007/263418 A1 (SRINIVAS PONNALURI ET AL.) 15. November 2007 (2007-11-15) * Zusammenfassung * * Abbildung 1 * * Absätze [0005], [0006] * ----- | 1-12 | |
| A | US 2007/296381 A1 (FABIO CONTICELLI ET AL.) 27. Dezember 2007 (2007-12-27) * Abbildung 1 * * Absatz [0006] * ----- | 1-12 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 5. Dezember 2008 | Lund, Michael |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 15 1808

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 6472775 | B1 | 29-10-2002 | KEINE | | |
| US 5648894 | A | 15-07-1997 | KEINE | | |
| US 6466465 | B1 | 15-10-2002 | KEINE | | |
| EP 1870997 | A | 26-12-2007 | WO | 2007147747 A2 | 27-12-2007 |
| US 2007263418 | A1 | 15-11-2007 | KEINE | | |
| US 2007296381 | A1 | 27-12-2007 | EP | 1870991 A1 | 26-12-2007 |
| | | | JP | 2008005694 A | 10-01-2008 |

EPO FORM P0461

Für nähere Einzelheiten zu diesem Anhang : siehe Amtsblatt des Europäischen Patentamts, Nr.12/82